Europäisches Patentamt

**European Patent Office**

**Office européen des brevets**

(11) Veröffentlichungsnummer: **0 178 248**
**A2**

(12) **EUROPÄISCHE PATENTANMELDUNG**

(21) Anmeldenummer: **85730083.4**

(22) Anmeldetag: **12.06.85**

(51) Int. Cl.⁴: **F 16 L 57/00**

(30) Priorität: **10.10.84 DE 3437564**

(43) Veröffentlichungstag der Anmeldung: **16.04.86**
**Patentblatt 86/16**

(84) Benannte Vertragsstaaten: **DE FR IT LU**

(71) Anmelder: **MANNESMANN Aktiengesellschaft,
Mannesmannufer 2 Postfach 5501,
D-4000 Düsseldorf 1 (DE)**

(72) Erfinder: **Wiedenhoff, Wolfgang, Dipl.-Ing.,
Hans-Sachs-Strasse 6, D-4330 Mülheim (DE)**
Erfinder: **Gärtner, Adolf W., Dr.-Ing., Benzstrasse 7,
D-4040 Neuss (DE)**
Erfinder: **Vogt, Gerd, Dr.-Ing., Bruckner Strasse 18,
D-4005 Meerbusch 1 (DE)**
Erfinder: **Weisgerber, Claus, Dipl.-Ing.,
Beethovenstrasse 6a, D-4330 Mülheim (DE)**

(74) Vertreter: **Meissner, Peter E., Dipl.-Ing. et al, Meissner &
Meissner Patentanwälte Herbertstrasse 22,
D-1000 Berlin 33 Grunewald (DE)**

(54) **Stahlrohr als Risstopper für Gasleitung.**

(57) Die Erfindung betrifft ein Stahlrohr als Rissstopper für Gasleitungen, dessen Länge mindestens 300 mm beträgt, einen Innendurchmesser gleich dem der Gasleitung aufweist und stirnseitig so beschaffen ist, dass es mit der Leitung stumpf verschweissbar ist.

Um ein Stahlrohr als Rissstopper für Gasleitungen, dessen Länge mindestens 300 mm beträgt, einen Innendurchmesser gleich dem der Gasleitung aufweist und stirnseitig so beschaffen ist, dass es mit der Leitung stumpf verschweissbar ist, zu schaffen, wird vorgeschlagen, dass das Stahlrohr an der äusseren oder inneren Mantelfläche Kerbungen oder Gefügeveränderungen (8, 13) enthält, die aus mindestens zwei Reihen um das Rohr unter einem Winkel von 35 bis 70° zur Rohrachse umlaufenden und im übrigen derart angeordneten Einheiten bestehen, dass sich die Einheiten überlappen und jede Mantellinie am Stahlrohr durch mindestens eine Einheit geht.

0178248

Stahlrohr als Rißstopper für Gasleitung.

Die Erfindung betrifft ein Stahlrohr als Rißstopper für Gasleitungen gemäß dem Oberbegriff des Patentanspruchs 1.

Für die Fortleitung von Erdgas oder Erdöl über große Entfernungen bei Gasdrücken von ca. 60 bar und höher werden überwiegend längsnahtgeschweißte Rohre verwendet, die aus thermomechanisch gewalztem Blech oder Bad hergestellt und zur Formverbesserung mechanisch expandiert sein können.

Da die Gefahren für die Leitung und ihre Umgebung im Falle einer - wenn auch selten eintretenden - örtlichen Rißeinleitung in Folge der raschen Rißausbreitung über große Leitungsstrecken sehr groß sind, sind schon viele Vorschläge veröffentlicht worden, mit denen die Rißausbreitung verhindert werden soll. Eine umfassende Darstellung enthält die Europa-Offenlegungsschrift 74 482. Die technischen Bedingungen, mit denen die Rißausbreitung verhindert werden kann, sind als bekannt anzusehen, jedoch haften den Vorschlägen meistens fertigungstechnische Mängel oder Mängel an zuverlässiger Wirkung an.

Nach einem Vorschlag soll die Leitung durchgehend in Lamellenbauweise aus Schraubennahtrohren erfolgen. Eine derartige Leitung mag für Abschnitte mit höchsten Sicherheitsanforderungen dann geeignet sein, wenn jede der Lamellenschicht für sich die volle Betriebsbedingung erfüllt. Herstellbar sind Rohre dieser Art für eine Leitung von beispielsweise 1000 km Länge und mehr in vertretbarer Zeit nicht.

Vorteilhafter und machbarer sind dagegen Leitungen aus längsnahtgeschweißten Rohren, in die sogenannte Rißstopper eingesetzt sind. Derartige Rißstopper können als besonders gestaltete Kurzrohre die normale einwandige Leitung stellenweise ersetzen (US-PS 30 96 105) oder diese örtlich verstärken (DE-PS 936 981). Diesen Vorschlägen haftet der Nachteil an, daß sie nur dann wirksam sind, wenn sie die Wanddicke der Leitung verstärken. Die Leitung muß aber zum Molchen innen glatt ud zum Oberflächenbeschichten und Verlegen außen glatt sein.

Aufgabe der Erfindung ist ein Stahlrohr, das sich vom normalen längsnahtgeschweißten oder schraubennahtgeschweißten Rohr äußerlich nicht unterscheidet, leicht herstellbar ist und bei vertretbaren Kosten die Rißausbreitung in der Leitung zuverlässig verhindert. Es wird dabei davon ausgegangen, daß ein einmal eingeleiteter Riß einen von den technischen Sicherheitseirichtungen der Leitung meßbaren Leitungsdefekt bewirken darf, daß dieser jedoch nach dieser zulässigen Ausbreitung zum Stillstand kommen muß. Dabei soll die Verteilulng der Rißstopper in einer Leitung dem Einzelfalj überlassen bleiben, abhängig davon, welcher Leitungsdefekt zugelassen wird.

Die Aufgabe löst ein Stahlrohr mit dem kennzeichnenden Merkmal des Anspruchs 1. Die vorteilhafte Ausgestaltung der Erfindung ist durch die Unteransprüche bestimmt.

Die Verwendung von Kerbungen oder Gefügeveränderungen im Sinne der im Anspruch 1 gegebenen Ausbildung sichert die Bedingung, daß ein etwa entlang einer Mantellinie verlaufender Riß im Rißstopperbereich in eine dieser Einheiten mündet und dort umgelenkt wird und endet. Dabei kann man davon ausgehen, daß das in erfinderischer Weise mit Kerbungen oder Gefügeveränderungen versehene Rohr mit einer bestimmten Gesamtwanddicke nahezu ebenso tragfähig ist wie das massive Rohr mit derselben Wanddicke. Die örtlichen Spannungserhöhungen an den Kerbungen usw. fallen nämlich nicht mit der Hauptbelastungsrichtung zusammen. Damit kann der Übergang von Leitungsrohr auf das als Rißstopper wirkende Stahlrohr innen und außen absatzlos sein.

Um darüber hinaus noch die Forderung zu erfüllen, daß die als Rißstopper dienenden Stahlrohre innen und außen glatt sein sollen, wird gemäß weiterer Unteransprüche vorgeschlagen, das Stahlrohr aus mehreren Bandlagen herzustellen, von denen dann eine Lage auf der von der anderen Lage verdeckten Oberfläche Kerbungen oder Gefügeveränderungen oder eine mittlere Bandlage sogar eine Perforation trägt. Es kann auch aus ungleich dicken Bandlagen bestehen, wobei die dickere Bandlage an der Oberfläche, die an dem Stahlrohr von der anderen Bandlage verdeckt ist, die Kerbung trägt. Mehr als drei Bandlagen sind nicht ausgeschlossen; für bislang übliche Leitungsdrücke sind sie jedoch nicht erforderlich.

Ohne daß es bei der Erfindung hierauf ankäme, werden die Bandlagen einzeln zu passenden Einzelrohren gefertigt oder zu passenden Einzelrohren aufgeweitet und ineinander gesteckt. Beim Ineinanderstecken kann es von Vorteil sein, daß das jeweils größere Einzelrohr leicht angewärmt wird. Dabei wird besonders vorteilhaft von innen nach außen gefertigt. Das heißt bei drei Bandlagen werden erst das innere Einzelrohr und das mittlere Einzelrohr zusammengesteckt und danach erst das äußere Einzelrohr aufgezogen.

Es ist auch möglich, die zwei oder drei Einzelrohre zusammenzustecken und gemeinsam zu expandieren. Das Expandieren erfolgt zweckmäßigerweise mechanisch und nicht hydraulisch. Wegen der Kürze der Einzelrohre ist das Zusammenstecken auch bei kleinem Durchmesserunterschied der Einzelrohre leicht möglich, so daß hierin sowohl bei zwei wie bei drei Bandlagen eine vorteilhafte Herstellungsart zu sehen ist. Natürlich sind die Schweißnahtüberhöhungen an den Einzelrohren zu entfernen, soweit sie sich nicht an der Oberfläche am Stahlrohr befinden.

Auf die Art der Herstellung der Perforierung oder Kerbung kommt es dabei nicht an. Zum Beispiel kann dies am ebenen Blech oder Band durch Walzen erfolgen, wobei das Walzen der Herstellung von Riffelblechen ähnelt; jedoch werden Eindrückungen erzeugt. Wird für die mittlere mit Kerbungen versehene Bandlage eines dreilagigen Stahlrohres ein derartiges Band verwendet, so können schmale Bänder erzeugt werden, die mit einer Steigung von 40 bis 70° zum Rohr geschweißt werden, und die Kerbungen verlaufen am Band in Längsrichtung.

Die Perforierungen oder Kerbungen können auch und vor allem an der zum ausgewählten Einzelrohr geformten und geschweißten Bandlage durch schaubenliniges durch oder um das Rohr geführte Werkzeuge erzeugt werden. Als Werkzeug kommt hier hauptsächlich ein Fingerfräser in Frage.

Ausführungsbeispiele von einem mehrlagigen Stahlrohr als Rißstopper für Leitungen zeigen die Figuren schematisch als Ausführungsbeispiel.

Figur 1    zeigt ein dreilagiges Stahlrohr mit Perforierungen in der mittleren Lage

Figur 1a   zeigt das Stahlrohr in Ansicht mit teilweise entfernter oberster Bandlage

Figur·1b   zeigt das Stahlrohr im Querschnitt

Figur 2    zeigt ein zweilagiges Rohr mit Kerbungen an dem dickwandigeren inneren Einzelrohr auf dessen Außenoberfläche

Figur 2a   zeigt das Stahlrohr in Seitenansicht mit teilweise entfernter Außenbandlage

Figur 2b   zeigt das Stahlrohr im Querschnitt

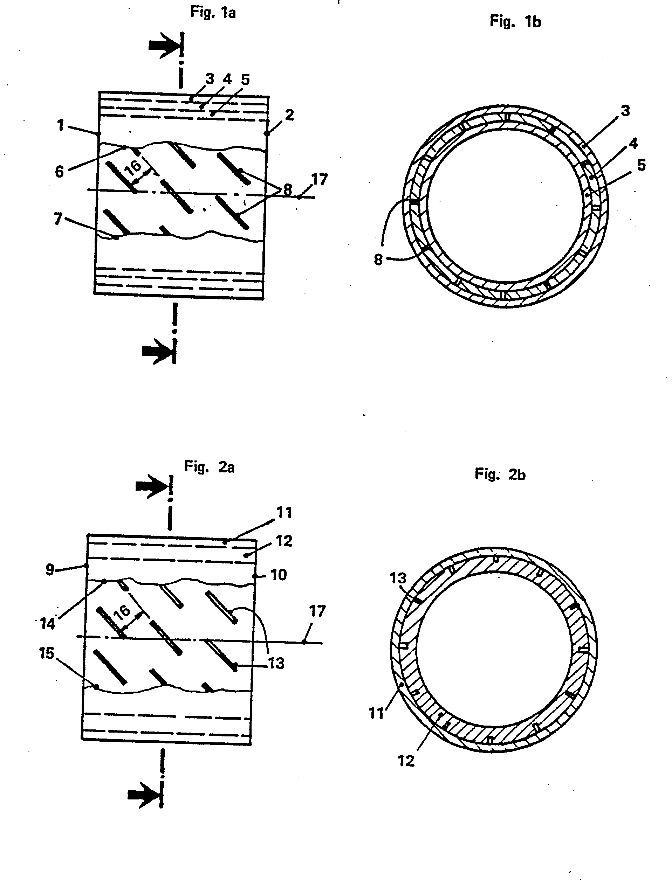

Figur 1a zeigt ein Stahlrohr als Rißstopper für Gasleitungen, dessen Stirnflächen 1 und 2 durch Umfangsnähte mit den längsnahtgeschweißten Rohren der Leitung verbunden werden. Das Stahlrohr besteht in diesem Fall aus den drei Bandlagen 3, 4, 5. Die Bandlage 5 hat den in Figur 1b sichtbaren Innendurchmesser, der gleich dem der Leitung ist. Ebenso hat die Bandlage 3 den Außendurchmesser gleich dem der Leitung. Die Länge des Stahlrohres beträgt 80 % des Außendurchmessers der seinerseits zwischen 300 und 1500 mm betragen kann.

In Figur 1a ist die mittlere Bandlage zwischen den Bruchlinien 6 und 7 sichtbar. In dem Ausschnitt sind Einheiten 8 der Perforierung an der Bandlage 4 sichtbar. Die Einheiten der Perforierung sind in Reihen und gegeneinander versetzt angeordnet, so daß sie sich in Achsrichtung des Rohres, d.h. entlang einer beliebigen Mantellinie überlappen. Die Einheiten sind in Richtung ihrer hauptsächlichen Erstreckung unter einem Winkel 16 zur Rohrachse angeordnet. Sie bilden in dieser Richtung Reihen von Perforierungs- oder Kerbungseinheiten. Die Perforierungseinheiten 8 sind in die mittlere Bandlage 4 von einem Fräserkopf eingearbeitet, bevor die drei Bandlagen 3, 4, 5 zusammengesteckt und mechanisch expandiert worden sind. Es werden danach an den Stirnflächen 1 und 2 kurze massive längsnahtgeschweißte Rohre angeschweißt, so daß ein Einheitsrohr von ca. 10 - 18 m Länge entsteht.

Figur 2a zeigt ein anderes Stahlrohr ebenfalls mit Stirnflächen 9, 10 zum Verbinden mit massiven Rohrabschnitten. Das Stahlrohr besteht aus den beiden Bandlagen 11 und 12, von denen die äußere Bandlage 11 dünner ist. Die innere Bandlage 12 ist oberflächlich mit Reihen von Kerbeinheiten 13 (Vertiefungen) versehen, die auch in Figur 2a zwischen den Bruchlinien 14 und 15 sichtbar sind. Die Kerbeinheiten sind genauso angeordnet und erzeugt wie in dem Beispiel nach Figur 1.

Nach der Herstellung der Kerbungen 13 sind beide Bandlagen 11 und 12 zusammengesteckt, expandiert und durch massive Endstücke auf die Verlegelänge von 10 - 18 m zu ergänzen.

0178248

Patentansprüche:

1. Stahlrohr als Rißstopper für Gasleitung dessen Länge mindestens 300 mm beträgt, einen Innendurchmesser gleich dem der Gasleitung aufweist und stirnseitig so beschaffen ist, daß es mit der Leitung stumpf verschweißbar ist,
d a d u r c h   g e k e n n z e i c h n e t ,
daß das Stahlrohr an der äußeren oder inneren Mantelfläche Kerbungen oder Gefügeveränderungen (8, 13) enthält, die aus mindestens zwei Reihen um das Rohr unter einem Winkel von 35 bis 70° zur Rohrachse umlaufenden und im übrigen derart angeordneten Einheiten bestehen, daß sich die Einheiten überlappen und jede Mantellinie am Stahlrohr durch mindestens eine Einheit geht.

2. Stahlrohr nach Anspruch 1,
d a d u r c h   g e k e n n z e i c h n e t ,
daß die kerbungs- oder gefügeveränderten Einheiten in Richtung der Reihe mindestens 10 bis etwa 100mal so lang sind wie senkrecht dazu und daß sie an den Schmalseiten ausgerundet sind.

3. Stahlrohr nach den Ansprüchen 1 oder 2,
d a d u r c h   g e k e n n z e i c h n e t ,
daß die Gefügeveränderug an Stählen der Güte 52 nach DIN 1626 oder DIN 1628 oder an thermomechanisch gewalz-ten Stählen mit

| | | |
|---|---|---|
| 0,1 - 0,16 | Massenprozent C | |
| 0,35 - 0,55 % | Si | |
| 1,6 - 2 % | Mn | |
| nicht mehr als 0,025 % | Phosphor | |
| nicht mehr als 0,010 % | Schwefel | |
| 0,02 - 0,06 % | Aluminium gesamt | |
| 0,07 - 0,14 % | Carbonitridbildner insgesamt | |

Rest Eisen durch Behandeln nach einem der folgenden
Verfahren ohne Zusatzwerkstoff erfolgt:

WIG-, Plasma-, Laser- oder Elektronenstahlschweißen

4. Stahlrohr nach einem der vorstehenden Ansprüche,
d a d u r c h   g e k e n n z e i c h n e t,
daß die Kerbungen oder Gefügeveränderungen etwa 1/10
bis 3/5 der massiven Wanddicke erfassen.

5. Stahlrohr nach einem der vorstehenden Ansprüche,
d a d u r c h   g e k e n n z e i c h n e t,
daß das Stahlrohr ein mit Schraubennaht geschweißtes
Rohr ist, dessen Naht um 35 bis 70° zur Rohrachse
verläuft, die zur Bildung der Kerbung oder Gefügeveränderung benutzt wird.

6. Verwendung eines Stahlrohres nach einem der
vorstehenden Ansprüche,
d a d u r c h   g e k e n n z e i c h n e t,
daß es eine Lage eines mehrlagigen Stahlrohres ist.

7. Verwendung eines Stahlrohres nach einem der
vorstehenden Ansprüche 1 bis 5,
d a d u r c h   g e k e n n z e i c h n e t,
daß die mit Kerbungen oder Gefügeveränderungen
versehene Oberfläche des Stahlrohres mit einem dünnwandigen Stahlrohr mit massiver Wanddicke belegt ist.

8. Verwendung eines Stahlrohres nach einem der vorstehenden Ansprüche 1 bis 5,
d a d u r c h   g e k e n n z e i c h n e t,

daß beide Oberflächen des Stahlrohres mit dünnwandigeren Stahrohren belegt sind und die Kerbungen oder Gefügeveränderungen am Stahl durch die Wanddicke hindurchgehende Perforierungen sind.

0178248

Fig. 1a

Fig. 1b

Fig. 2a

Fig. 2b